Europäisches Patentamt

European Patent Office

Office européen des brevets

(19)

(11) Publication number: 0 400 776
A2

(12) **EUROPEAN PATENT APPLICATION**

(21) Application number: 90301918.0

(22) Date of filing: 22.02.90

(51) Int. Cl.⁵: G01V 1/38

(30) Priority: 30.05.89 US 358887
25.08.89 US 398813

(43) Date of publication of application:
05.12.90 Bulletin 90/49

(84) Designated Contracting States:
DE FR GB

(71) Applicant: HALLIBURTON GEOPHYSICAL
SERVICES, INC.
7800 Banner Drive
Dallas, Texas 75251(US)

(72) Inventor: Sanders, Joe I.
1407 Maygrove Drive
Sugarland, Texas 77478(US)
Inventor: Shuck, Edward L.
7206 Currin Drive
Dallas, Texas 75230(US)
Inventor: Monk, David J.
Grannessletta 146
N-4052 Royneberg(NO)

(74) Representative: Wain, Christopher Paul et al
A.A. THORNTON & CO. Northumberland
House 303-306 High Holborn
London WC1V 7LE(GB)

(54) Marine seismic surveying utilizing dual streamers.

(57) A marine seismic surveying method utilizes two vertically spaced marine streamers (18,20) each having a plurality of seismic detectors (22,24) contained therein, and a seismic energy source (16) positioned at or near the surface (38) of a body of water (10) to generate seismic waves (30,32,34) which propagate into earth formations (26,28) below the water and reflect back up to be detected at each streamer. Seismic waves also reflect from the water/air interface back down toward the streamers. The seismic waves detected at two selected vertically displaced seismic detectors (22,24) are combined to form a sum signal which is then combined with a scaled time integral of a difference signal to form a resultant signal which preserves either the upgoing or downgoing seismic waves. In a preferred embodiment of the present invention, the sum signal and the integral signal are both filtered to remove DC bias and low frequency components prior to the combination. Additionally, the time integral of the difference signal is preferably scaled by balancing the power therein with the power in the sum signal, thereby automatically adjusting for variations in detector spacing which may occur. In one embodiment of the present invention, the upgoing signal and downgoing signal are time shifted and combined to maximize the resultant signal-to-noise ratio.

Fig. 1

## MARINE SEISMIC SURVEYING UTILIZING DUAL STREAMERS

The present invention relates to marine seismic surveying and, in particular, to marine seismic surveying utilizing two vertically spaced streamers.

Seismic surveying is well known and typically involves the utilization of a source of seismic energy and one or more arrays of seismic detectors which are strategically positioned to receive the seismic waves generated by the source of seismic energy. The source of seismic energy may, for example, be an apparatus capable of delivering a series of impacts or mechanical vibrations to the surface of the earth or the detonation of a high explosive charge near the earth's surface. The resultant acoustic waves which are generated in the earth, including those which are reflected from the various strata interfaces within the formations of the earth, are then detected by seismic detectors which convert these acoustic waves into representative electrical signals. From these electrical signals, data may be deduced concerning the structure of these strata within the earth's surface.

Marine seismic surveying operates in much the same manner. An explosive device or vibration-inducing compressed air system is typically utilized to generate seismic energy which then propagates as seismic waves into the earth formations below the surface of a body of water. Reflections of this seismic energy from the various strata within the earth are then detected at a plurality of seismic receivers which are generally coupled together in so-called "streamers" and towed behind a marine craft. It is well known to utilize more than one streamer, each of which may contain over 10,000 seismic detectors. Further, multiple streamers are often towed in a vertically spaced alignment to permit variations due to the proximity of the water surface to be factored out.

A problem in all forms of marine seismic processing occurs due to the fact that seismic wave energy, after reflection from subterranean strata and travel upward to the detectors within the streamer, will often be reflected again at the water/air interface and travel downward, once again passing the detectors within a streamer. The complex nature of seismic wave signals makes interpretation difficult under the best of conditions; however, the addition of a downward travelling seismic wave renders this process exceedingly difficult.

A similar problem has occurred in so-called vertical seismic profiling or "VSP" wherein multiple seismic detectors are suspended beneath the surface of the earth in a borehole and seismic energy is imparted to the earth at the surface. As described above, with this situation the seismic waves which impact the detectors suspended within the borehole may be travelling upward due to reflections from subterranean strata or downward as a direct seismic wave generated by the seismic energy source.

U.S. Patent No. 4,794,573, issued to David W. Bell et al. and assigned to Conoco, Inc. of Ponca City, Oklahoma, proposed a solution to this problem in VSP applications which is based upon the concept that waves travelling in opposite directions have spatial derivatives of opposite sign. In accordance with the Bell et al. method the derivative of the seismic signal is approximated by the difference of two signals from vertically spaced detectors which is then time integrated to recover the phase. The resulting integrated difference signal is then amplitude scale corrected and combined, by addition or subtraction, with a signal which represents the sum of the two detector signals to form a succession of filtered signals, which, when recorded in alignment in order of detector depths, form a vertical seismic profile which may preserve either the upgoing or downgoing seismic events.

The Bell et al. process represents a substantial improvement in the vertical seismic profiling environment; however, the accuracy of the process has been found to suffer due to the sensitivity of the integration process to the presence of small direct current bias within the recorded traces or low frequency components in general. Further, during vertical seismic profiling the detectors are spaced a fixed distance apart. This distance is known and may be utilized to scale the integrated difference signal. In contrast, in a marine seismic environment the distance between two vertically displaced detectors within two seismic streamers will vary due to the dynamic nature of the process involved in towing a seismic streamer through a body of water. Thus, merely scaling the integrated difference signal as proposed in the Bell at al. process cannot be easily accomplished without introducing additional errors into the data.

With a view to overcoming or mitigating these problems, we have now devised a marine seismic surveying method whereby some separation of the upgoing and downgoing seismic waves is obtained whereby the adverse effects of the downward travelling reflections of seismic waves from the water/air interface are reduced.

According to the present invention, there is provided a method of marine seismic geophysical surveying wherein a seismic energy source positioned at or near the surface of a body of water is adapted to generate seismic wave energy which is detectable by a plurality of seismic detectors linked in two vertically spaced marine streamers and towed behind a marine craft, said method comprising the steps of: generating seismic waves utilizing said seismic energy source; detecting the resultant seismic waves at said plurality of seismic detectors which are linked in two vertically spaced marine streamers and generating an electrical signal at each seismic detector representative of said detected seismic wave; combining said electrical signal from a first seismic detector within the lower of said two vertically spaced marine streamers with said electrical signal from a corresponding second seismic detector within the higher of said two vertically spaced marine streamers to form a sum signal; subtracting said electrical signal from said first seismic detector from said electrical signal from said second seismic detector to form a difference signal; integrating said difference signal to form an integral signal; removing DC bias and low frequency components from said integral signal; scale correcting said integral signal to form a resulting signal which is an approximation of an electrical signal from a seismic detector disposed midway between said first seismic detector and said second seismic detector; and combining said corrected resulting signal with said sum signal to obtain a modified signal wherein the amplitudes of said seismic waves which are travelling upward as they arrive at said seismic detectors are increased and the amplitudes of said seismic waves which are travelling downward as they arrive at said seismic detectors are attenuated.

In the method of the present invention, at least two vertically spaced marine streamers each having a plurality of seismic detectors contained therein are utilized and a seismic energy source positioned preferably at or near the surface of the body of water. The generated seismic waves propagate into earth formations below the water and reflect back up to be detected at each streamer, and are also subsequently reflected from the water/air interface back down toward the streamers. The seismic waves detected at two selected vertically displaced seismic detectors are combined to form a sum signal which is then combined with a scaled time integral of a difference signal to form a resultant signal which preserves either the upgoing or downgoing seismic waves.

This resultant signal may be utilized to provide an upgoing or downgoing seismic signal which will appear to originate from an effective receiver position which is located midway between the two vertically spaced seismic detectors. As will be apparent to those skilled in the art, the reflection information contained in both the upgoing and downgoing signals is identical. However, the downgoing signal has been delayed in time by twice the time distance from the effective receiver position to the water surface. Thus, by time shifting the downgoing signal and combining it with the upgoing signal it is possible to improve the signal-to-noise ratio of the resultant trace.

In one preferred embodiment of the present invention, the sum signal and the integral signal are both filtered to remove DC bias and low frequency components prior to combination. Additionally, the time integral of the difference signal is preferably scaled by balancing the power therein with the power in the sum signal, thereby automatically adjusting for variations in detector spacing which may occur.

In order that the invention may be more fully understood, reference is made to the accompanying drawings, wherein:

Figure 1 is a diagrammatic illustration of an earth cross-section under a body of water and a marine seismic survey in accordance with the method of the present invention; and

Figure 2 is a block diagram illustrating one system embodiment for filtering seismic detector signals in accordance with the method of the present invention.

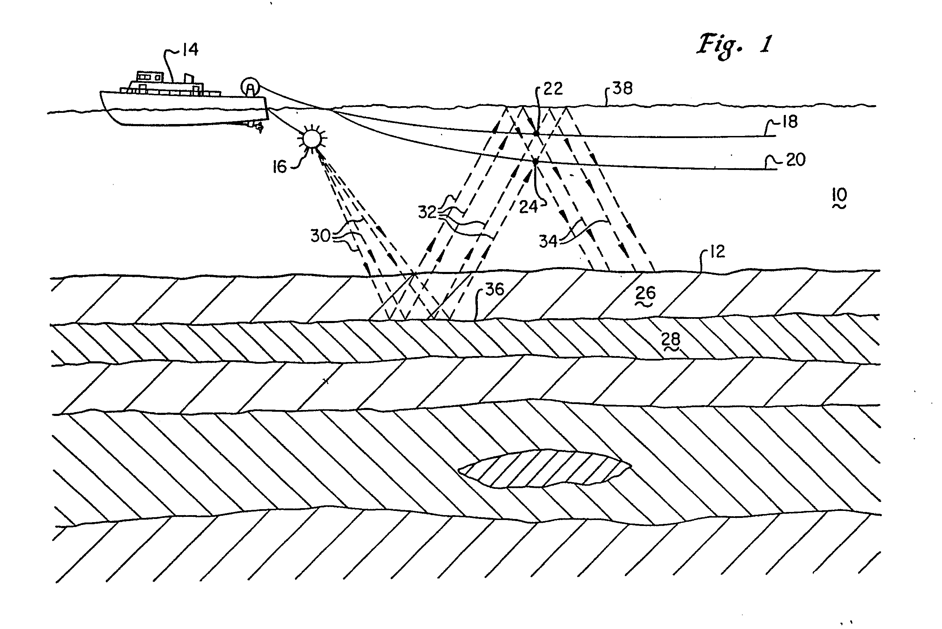

With reference now to the figures and in particular with reference to **Figure 1**, there is depicted a diagramatic illustration of a portion of the earth's surface under a body of water and a marine seismic survey being conducted in accordance with the method of the present invention. As may be seen, the marine seismic survey is being conducted within a body of water **10**, which may comprise a lake or ocean, as is well known in the art. Body of water **10** is illustrated as overlying a portion of the earth's surface **12** which is to be investigated utilizing the marine seismic survey method of the present invention.

As is illustrated, a marine craft **14** is utilized in the depicted embodiment of the present invention and serves to tow a seismic source **16**, disposed at or near the surface of body of water **10**. Seismic source **16** comprises any source capable of generating seismic energy and may utilize an explosive device or a compressed air gun in order to generate such seismic waves. Also depicted in **Figure 1** are upper streamer **18** and lower streamer **20**, which are towed by marine craft **14** beneath the surface of body of water **10**. As those skilled in the art will appreciate, upper streamer **18** and lower streamer **20** will normally each comprise a large number of seismic detectors (not shown) which are coupled together to form the streamer. Two exemplary seismic detectors are illustrated in **Figure 1**. Namely, upper detector **22** and lower detector **24**; however, it should be appreciated that these two detectors are merely representative of many such detectors which will normally be utilized in a state-of-the-art marine streamer.

In operation the seismic waves generated by seismic source **16** will travel downward, as indicated at reference numeral 30, and be reflected off the various strata within the earth's surface. For purposes of simplification seismic waves **30** are illustrated as reflecting off interface **36** between strata **26** and **28**. Of course, those skilled in the art will appreciate that seismic waves **30** will reflect off each interface within the surface of the earth and that the actual reflections are substantially more complex than the simplified illustration presented.

Next, the upward reflections of the illustrated seismic waves, as depicted at reference numeral **32**, will travel upward generally passing the area occupied by upper streamer **18** and lower streamer **20**. As is illustrated, these upward reflections will be detected by upper detector **22** and lower detector **24** and appropriate electrical signals will be generated which may be utilized to characterize the nature of the strata within the surface of the earth.

Thereafter, the upward reflections of the generated seismic waves will impact upon the water/air interface **38** which exists at the surface of body of water **10**. In accordance with well known physical laws a portion of the energy within upward reflections **32** will then be reflected downward resulting in a second set of reflections in a downward direction, as illustrated at reference numeral **34**. These downward reflections will once again pass through the area occupied by upper streamer **18** and lower streamer **20**, resulting in the electrical signals being generated at each detector being a composite of both upgoing and downgoing seismic events.

In accordance with the method of the present invention there is depicted a process whereby it is possible to increase the amplitudes of the seismic waves traveling either upward or downward while simultaneously attenuating the waves traveling in the opposite direction. This may be described mathematically as follows. It is first assumed that a seismic detector which is located at the midpoint between upper detector **22** and lower detector **24** would record a trace which is the sum of the upwardly traveling and downwardly traveling wave fields. This trace may be expressed as follows in Equation **1**:

(1) $MID(T) = U(T) + D(T)$

Where $U(T)$ represents the upwardly traveling wave field and $D(T)$ represents the downwardly traveling wave field.

It therefore follows that what is actually recorded by upper detector **22** and lower detector **24** may be expressed as follows:

(2) $UPPER(T) = U(T + dt) + D(T - dt)$

(3) $LOWER(T) = U(T - dt) + D(T + dt)$

Where dt is equal to one-half the travel time between the actual receiver positions. As those skilled in the mathematical arts will appreciate, all of the terms within Equations **2** and **3** may be expanded utilizing a Taylor series expansion in dt, as illustrated below in Equations **4, 5, 6** and **7**:

(4) $U(T + dt) = U(T) + U'(T).(-dt) + \text{other items}$

(5) $D(T - dt) = D(T) + D'(T).(+dt) + \text{other items}$

(6) $U(T - dt) = U(T) + U'(T).(+dt) + \text{other items}$

(7) $D(T + dt) = D(T) + D'(T).(-dt) + \text{other items}$

By rewriting Equations **2** and **3** and limiting the Taylor series expansion to the first order terms yields the following expressions:

(8) $UPPER(T) = U(T) + U'(T).(-dT) + D(T) + D'(T).(+dt)$

(9) $LOWER(T) = U(T) + U'(T).(+dT) + D(T) + D'(T).(-dt)$

Next, it is possible to express two traces which represent the sum and the difference of the signals received at upper detector **22** and lower detector **24** by adding together or subtracting Equations **8** and **9**. This result in Equations **10** and **11**:

(10) $SUM(T) = 2.U(T) + 2.D(T)$

(11) $DIF(T) = U'(T).(-2dt) + D'(T).(+2dt)$

Thereafter, it is possible to integrate the difference trace to obtain the result listed below as Equation **12**:

(12) $INTDIF(T) = -2dt.U(T) + 2dt.D(T)$

Those skilled in the mathematical arts will then appreciate that by scaling the integrated difference signal obtained in Equation **12** by an appropriate factor and combining that scale corrected signal with the sum trace, as expressed in Equation **10**, by addition or subtraction, it will be possible to obtain either $D(T)$ or $U(T)$, as expressed in Equations **13** and **14** below:

(13) $D(T) = 1/4.( SUM(T) + (1/dt).INTDIF(T) )$

(14) $U(T) = (1/4).( SUM(T) - (1/dt).INTDIF(T) )$

While the mathematics described above are relatively straight forward, the Applicants have determined that in actual practice it is necessary to take several other steps in order to generate an accurate seismic trace which truly attenuates or increases either the upwardly traveling reflections or downwardly traveling reflections. These additional steps are set forth herein.

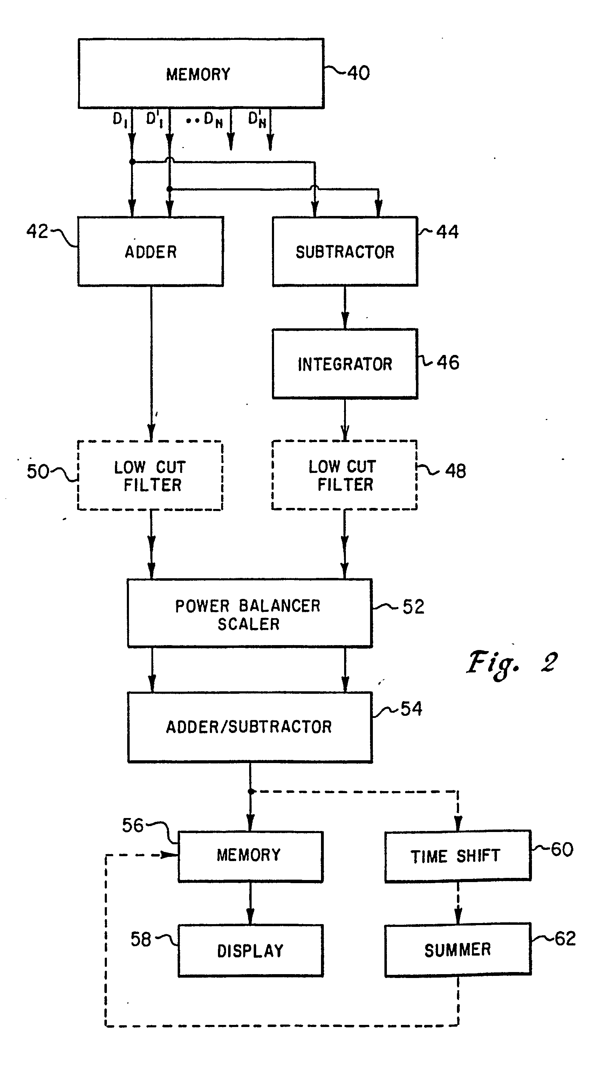

Referring now to **Figure 2**, there is depicted a block diagram which illustrates a system for filtering seismic detector signals in accordance with the method of the present invention. As may be seen, the electrical signals generated from each pair of vertically spaced detectors within upper streamer **18** and lower streamer **20** (see **Figure 1**) are preferably recorded and stored in a memory **40**. Memory **40** is preferably controlled so as to furnish for processing a pair of detector signals $D_1$ and $D_1'$ which correspond to the seismic signals obtained from two seismic detectors which are vertically spaced within upper streamer **18** and lower streamer **20**, such as upper detector **22** and lower detector **24**. This pair of signals are thereafter delivered to adder **42** and subtracter **44** which are utilized, in accordance with the broad description of the method of the present invention which is described with respect to the aforementioned mathematical process, to create a sum signal and a difference signal.

The difference signal is thereafter applied to integrater **46** to create an integrated difference signal; however, the Applicants have determined that in order to provide the degree of accuracy necessary to practice this method it is necessary to address the sensitivity of the integration process to the presence of small DC bias signals on the seismic traces, or the presence of low frequency components in general. One method whereby it has been discovered that this sensitivity may be minimized is by performing a band limited integration within integrater **46**. By this what is meant is an integration process which takes place only over those frequencies which are higher than a frequency which has been selected in order to decrease the sensitivity of the integration process to low frequency components. Alternately, the output of integrater **46** and the output of adder **42** may be applied to a low-cut filter which is then utilized to remove small DC bias signals or low frequency components. In practice the Applicants have discovered that it is preferable to filter out all components below 8 hertz when practicing the method of the present invention.

Thereafter, it is necessary to scale the integrated difference signal by a scaling function which is a function of the separation between the two detectors. While this technique may be utilized easily during vertical seismic profiling, due to the fact that the detectors remain a fixed and known distance apart, the motion of a marine streamer through a body of water makes determination of the actual separation of the streamers a nontrivial exercise. This problem has been solved in a preferred embodiment of the method of the present invention by applying the output of adder **42** and integrater **46** to a power balancer/scaler **52**. By balancing the power between the sum trace scaling and the integrated difference trace may be easily achieved without the necessity of knowing with certainty the separation between receivers. This is particularly important in that this technique accommodates variations in separation which may occur in marine seismic surveying and may be implemented simply with known circuitry. Thereafter, the power balanced sum trace and integrated difference trace may be combined by adding or subtraction to emphasize of attenuate either the upwardly traveling reflections or the downwardly traveling reflections, as described depicted in block **54**.

Next, in one optional aspect of the processing method of the present invention, the upgoing and downgoing signals generated by adding and subtracting the sum signal and the integrated difference signal, as illustrated in block **54**, may be utilized to enhance the signal estimate in the following manner. As discussed above, the upgoing and downgoing signals both contain identical reflection information; however, the reflection information contained within the downgoing signal is delayed by a time equal to twice the time distance from the effective receiver position to the water surface. Block **60** illustrates the time shifting of one signal by crosscorrelation, time warping or any other technique, thereby removing the aforementioned time delay. Next, block **62** illustrates the summation of one signal with the time shifted other signal to create a resultant signal which is greatly enhanced in terms of signal-tonoise ratio.

Of course, those skilled in the art will appreciate that the corrected seismic trace generated by either of the above described methods may thereafter be stored in a memory device **56** which may comprise a magnetic tape or solid-state memory device and may be displayed for visual confirmation via display unit **58**.

Those skilled in the art will appreciate upon reference to the foregoing specification that the Applicants have provided a novel method whereby the problem of downwardly traveling reflections from the water/air interface during marine seismic processing may be simply and easily eliminated by the processing of two vertically spaced seismic detectors signals without the necessity of knowing the exact spacing between the two detectors. Further, it should be apparent that after isolating the upwardly traveling reflections from the downwardly traveling reflections it will be possible to shift one trace and thereafter add that trace to the remaining trace in order to enhance the signal to noise ratio.

Although the invention has been described with reference to a specific embodiment, this description is not to be construed in a limiting sense. Various modifications of the disclosed embodiment as well as alternative embodiments of the invention will become apparent to persons skilled in the art upon reference to the description of the invention.

## Claims

1. A method of marine seismic geophysical surveying wherein a seismic energy source (16) positioned at or near the surface (38) of a body of water (10) is adapted to generate seismic wave energy which is detectable by a plurality of seismic detectors (22,24) linked in two vertically spaced marine streamers (18,20) and towed behind a marine craft (14), said method comprising the steps of: generating seismic waves (30,32,34) utilizing said seismic energy source (16); detecting the resultant seismic waves at said plurality of seismic detectors (22,24) which are linked in two vertically spaced marine streamers (18,20) and generating an electrical signal at each seismic detector representative of said detected seismic wave; combining said electrical signal from a first seismic detector (24) within the lower (20) of said two vertically spaced marine streamers with said electrical signal from a corresponding second seismic detector (22) within the higher (18) of said two vertically spaced marine streamers to form a sum signal; subtracting said electrical signal from said first seismic detector (24) from said electrical signal from said second seismic detector (22) to form a difference signal; integrating said difference signal to form an integral signal; removing DC bias and low frequency components from said integral signal; scale correcting said integral signal to form a resulting signal which is an approximation of an electrical signal from a seismic detector disposed midway between said first seismic detector (24) and said second seismic detector (22); and combining said corrected resulting signal with said sum signal to obtain a modified signal wherein the amplitudes of said seismic waves which are travelling upward as they arrive at said seismic detectors are increased and the amplitudes of said seismic waves which are travelling downward as they arrive at said seismic detectors are attenuated.

2. A method according to claim 1, further including the step of recording said electrical signals generated at each of said plurality of seismic detectors prior to combining said electrical signals.

3. A method according to claim 1 or 2, wherein said step of removing DC bias and low frequency components from said integral signal is effected by low cut filtering said integral signal.

4. A method according to claim 1 or 2, wherein said step of removing DC bias and low frequency components from said integral signal is effected by performing band limited integration during said integrating step.

5. A method according to any of claims 1 to 4, wherein said scale correcting step is effected by balancing the power in said sum signal and said integral signal.

6. A method according to any of claims 1 to 5, further including the step of removing DC bias and low frequency components from said sum signal prior to combining said sum signal and said integral signal.

7. A method according to any of claims 1 to 6, wherein said step of combining said scale corrected resulting signal with said sum signal provides a first modified signal, and wherein the method includes the further steps of combining said scale corrected resulting signal with said sum signal to obtain a second modified signal wherein the amplitudes of said seismic waves which are travelling upward as they arrive at said seismic detectors are attenuated, and the amplitudes of said seismic waves which are travelling downward as they arrive at said seismic detectors are increased; time shifting said second modified signal to obtain maximum crosscorrelation with said first modified signal; and summing said time shifted second modified signal with said first modified signal to obtain an enhanced reflection signal.

Fig. 1

Fig. 2